# EUROPÄISCHE PATENTANMELDUNG

(11) **EP 1 310 418 A2**
(43) Veröffentlichungstag der Anmeldung: **14.05.2003**
(21) Anmeldenummer: 02024625.2
(22) Anmeldetag: 04.11.2002
(51) Int. Cl.: B62B 15/00

(54) **Schneegleiter**

(30) Priorität: 10.11.2001 DE 10155374
(71) Anmelder: Maas, Freimut, 70372 Stuttgart (DE)
(72) Erfinder: Maas, Freimut, 70372 Stuttgart (DE)
(74) Vertreter: Patentanwalts-Partnerschaft, Rotermund + Pfusch + Bernard

(57) **Zusammenfassung**

Die vorliegende Erfindung betrifft einen Schneegleiter (1) mit einer Fahrzeugschale (2), die an ihrer Innenseite zur Aufnahme wenigstens einer Person dient, die an ihrer Außenseite mehrere, in Fahrzeuglängsrichtung verlaufende Kanten (6) aufweist und deren Außenseite in einem quer zur Fahrzeuglängsrichtung verlaufenden Querschnitt zur Fahrbahn hin im wesentlichen konvex gestaltet ist.

Um das Lenkverhalten dieses Schneegleiters (1) zu verbessern, sind zumindest einige der Kanten (6) in einer senkrecht zur Fahrbahn orientierten Projektion zu einer senkrecht zur Fahrbahn verlaufenden Längsmittelebene (7) der Fahrzeugschale (2) hin konvex gekrümmt.

## Beschreibung

Die vorliegende Erfindung betrifft einen Schneegleiter mit den Merkmalen des Oberbegriffs des Anspruchs 1.

Ein derartiger Schneegleiter ist beispielsweise aus der EP 0 253 858 B1 bekannt und weist eine Fahrzeugschale auf, die an ihrer Innenseite zur Aufnahme wenigstens einer Person dient. Die Fahrzeugschale weist an ihrer Außenseite mehrere, in Fahrzeuglängsrichtung verlaufende Kanten auf. Desweiteren ist die Außenseite der Fahrzeugschale in einem quer zur Fahrzeuglängsrichtung verlaufenden Querschnitt zur Fahrbahn hin im wesentlich konvex gestaltet. Beim bekannten Schneegleiter verlaufen sämtliche Kanten in einer senkrecht zur Fahrbahn orientierten Projektion parallel zueinander und parallel zu einer senkrecht zur Fahrbahn verlaufenden Längsmittelebene der Fahrzeugschale. Die Kanten sind in einer senkrecht zur Längsmittelebene orientierte Projektion in einem Frontabschnitt der Fahrzeugschale, der wenigstens 70% der Gesamtlänge der Fahrzeugschale umfasst, zur Fahrbahn hin relativ stark konvex gekrümmt.

Für eine Geradeausfahrt sitzt eine Person so im Schneegleiter, dass sich der Systemschwerpunkt im wesentlichen in der Mitte des Schneegleiters befindet. Die parallel zur Fahrbahn verlaufenden Kanten sorgen für eine stabile Geradeausfahrt. Zur Kurvensteuerung verlagert die Person ihr Gewicht und erzwingt dadurch eine Schräglage des Schneegleiters, wodurch auf einer Schalenseite weiter außen liegende Kanten stärker mit der Fahrbahn in Eingriff kommen. Durch die Krümmung der Kanten erfolgt nun eine Kurvenführung, die den Schneegleiter in die gewünschte Richtung lenkt. In der Praxis hat sich jedoch gezeigt, dass der bekannte Schneegleiter bereits bei geringen Schräglagen relativ stark und mit unter abrupt einlenkt, so dass für eine dosierte Lenkung sehr viel Übung erforderlich ist.

Die vorliegende Erfindung beschäftigt sich mit dem Problem, für einen Schneegleiter der eingangs genannten Art eine Ausführungsform anzugeben, die relativ leicht steuerbar ist.

Dieses Problem wird erfindungsgemäß durch einen Schneegleiter mit den Merkmalen des Anspruchs 1 gelöst. Vorteilhafte Ausführungsformen sind Gegenstand der abhängigen Ansprüche.

Die Erfindung beruht auf dem allgemeinen Gedanken, die Kanten des Schneegleiters in einer bezüglich der Fahrbahn senkrechten Projektion tailliert auszugestalten. Taillierte Kanten sind bei sogenannten "Carving-Skis" grundsätzlich bekannt. Die vorliegende Erfindung überträgt nun dieses Carving-Prinzip von einem Ski mit zwei Kanten auf einen Schneegleiter, der mehr als zwei Kanten aufweisen kann. Der Carving-Effekt bei einem Ski zeichnet sich insbesondere dadurch aus, dass beim Einleiten einer Kurve die Durchbiegung des Skis stärker ausgeprägt wird, wodurch sich der Kurvenradius reduziert und der Ski entsprechend stärker einlenkt. Entscheidend für die Wirksamkeit des Carving-Effekts ist beim Ski somit eine optimale Abstimmung der Taillierung mit der Biegeelastizität des Skis. Die Erfindung hat nun erkannt, dass die Taillierung der Kanten auch bei einem Schneegleiter das Lenkverhalten verbessert, obwohl der Schneegleiter im Vergleich zu einem Ski keine oder nur eine sehr kleine Biegeelastizität besitzt.

Bei einer vorteilhaften Weiterbildung kann bei zwei Kanten, die bezüglich der Längsmittelebene auf einer Schalenseite benachbart sind, die bezüglich der Längsmittelebene weiter außen liegende Kante sich bezüglich der Fahrzeuglängsrichtung weiter nach vorn erstrecken als die bezüglich der Längsmittelebene nach innen benachbarte Kante. Durch diese Bauweise wird für eine Schrägstellung des Schneegleiters, bei der diese beiden Kanten gleichzeitig mit der Fahrbahn in Eingriff stehen, das Lenkverhalten zusätzlich verbessert. Dieser Fahrzustand entspricht der Kurvenfahrt eines professionellen Skifahrers, der den kurveninneren Ski etwas nach vorn versetzt anordnet.

Eine Weiterbildung kennzeichnet sich dadurch, dass wenigsten zwei Kanten, die bezüglich der Längsmittelebene auf derselben Schalenseite benachbart sind, die selbe Krümmung aufweisen. Durch diese Bauweise können die gleich gekrümmten Kanten bei hinreichender Schräglage des Schneegleiters gleichzeitig und gleichwirkend mit der Fahrbahn zusammenwirken, wodurch eine besonders stabile Kurvenführung, z.B. am Hang, ermöglicht wird.

Von besonderer Bedeutung ist eine Ausführungsform, bei der zumindest einige der Kanten in einer senkrecht zur Längsmittelebene orientierten Projektion von einem Heckabschnitt der Fahrzeugschale bis wenigstens in einen Mittelabschnitt der Fahrzeugschale einen geradlinigen Verlauf und in einem Frontabschnitt der Fahrzeugschale einen zur Fahrbahn hin relativ schwach konvex gekrümmten Verlauf aufweisen. Diese Bauweise gewährleistet einerseits eine relativ stabile Geradeausführung und vereinfacht andererseits beim Einstellen einer Schräglage des Schneegleiters einen relativ sanften Übergang in die Kurvenführung.

Die Geradeausfahreigenschaft des erfindungsgemäßen Schneegleiters kann auch dadurch verbessert werden, dass in der senkrecht zur Fahrbahn orientierte Projektion zwischen den beiderseits der Längsmittelebene am nächsten der an der Längsmittelebene verlaufenden gekrümmten Kanten wenigstens eine geradlinige Kante vorgesehen ist. Eine derartige Kante wirkt quasi als sogenannte "Finne", die aus dem Wassersport bekannt ist.

Entsprechend einer besonders vorteilhaften Ausführungsform kann die Fahrzeugschale nach oben offen ausgebildet sein, wobei ihre Innenseite und ihre Außenseite so aufeinander abgestimmt sind, dass mehrere Fahrzeugschalen ineinander stapelbar sind. Diese Bauweise ermöglicht eine besonders raumsparende Unterbringung mehrerer Fahrzeugschalen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen..

Es zeigen, jeweils schematisch,
- Fig. 1: einen Seitenansicht auf einen erfindungsgemäßen Schneegleiter,
- Fig. 2: eine Ansicht von hinten auf den Schneegleiter,
- Fig. 3: eine Ansicht von unten auf den Schneegleiter und
- Fig. 4: verschiedene Querschnitte des Schneegleiters gemäß den Schnittlinien A-A, B-B und C-C in Fig. 3.

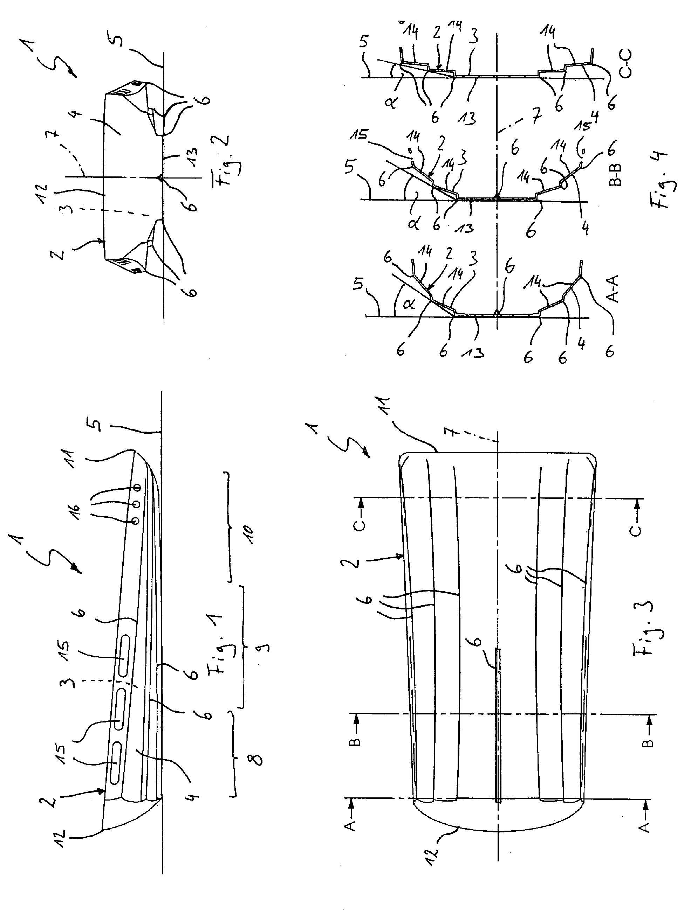

Entsprechend Fig. 1 besteht ein erfindungsgemäßer Schneegleiter 1 im wesentlichen aus einer Fahrzeugschale 2, die wannenförmig und nach oben offen ausgestaltet ist. Die Fahrzeugschale 2 ist zweckmäßig als Tiefziehteil aus Blech oder Kunststoff hergestellt. Ebenso kann die Fahrzeugschale als Spritzgussteil ausgebildet sein. Vorteilhaft sind eine Innenseite 3 und eine Außenseite 4 der Fahrzeugschale 2 hinsichtlich ihrer Formgebung so aufeinander abgestimmt, dass mehrere Fahrzeugschalen 2 raumsparend ineinander stapelbar sind.

Die Innenseite 3 der Fahrzeugschale 2 dient zur Aufnahme einer oder mehrerer Personen und kann dementsprechend mit hier nicht gezeigten Polstern, Sicherheitsgurten und dergleichen ausgestattet sein. Über die Außenseite 4 der Fahrzeugschale 2 erfolgt der Kontakt mit einer Fahrbahn 5. Zur Geradeausführung und zur Kurvenführung weist die Fahrzeugschale 2 an ihrer Außenseite 4 mehrere in Fahrzeuglängsrichtung verlaufende Kanten 6 auf, von denen sich die meisten im wesentlichen über die gesamte Länge der Fahrzeugschale 2 erstrecken.

Wie besonders aus den Querschnitten der Fig. 4 hervorgeht, ist die Außenseite 4 der Fahrzeugschale 2 zumindest in den gezeigten Querschnitten zur Fahrbahn 5 hin im wesentlichen konvex gestaltet. Dabei nimmt die Krümmung der Außenseite 4 bezüglich der Fahrzeuglängsrichtung von hinten nach vorn ab, d.h. die Fahrzeugschale 2 ist im vorderen Querschnitt C-C erheblich flacher als in den hinteren Querschnitten A-A und B-B.

Fig. 3 zeigt eine Ansicht von unten auf den Schneegleiter 1, was einer Projektion senkrecht zur Fahrbahn 5 entspricht.

Entsprechend Fig. 3 sind diejenigen Kanten 6, die bezüglich einer senkrecht zur Fahrbahn 5 verlaufenden Längsmittelebene 7 beabstandet angeordnet sind, zu dieser Längsmittelebene hin konvex gekrümmt. Hierdurch ergibt sich einen Taillierung dieser Kanten 6. Diese taillierten Kanten 6 ermöglichen eine relativ stabile Kurvenführung des Schneegleiters 1.

Darüber hinaus kann zwischen den taillierten Kanten 6, nahe der Längsmittelebene 7 wenigstens eine in der Ansicht gemäß Fig. 3 geradlinige Kante 6 vorgesehen sein. Zweckmäßig liegt diese eine gerade Kante 6 genau in der Längsmittelebene 7. Es ist klar, dass auch mehrere geradlinige Kanten 6 vorhanden sein können, die dann mittig zwischen den innersten gekrümmten Kanten 6 angeordnet sind. Die wenigstens eine mittlere geradlinige Kante 6 verbessert die Geradeausführung des Schneegleiters 1.

Wie aus den Figuren hervorgeht, sind sämtliche Kanten 6 bezüglich der Längsmittelebene 7 spiegelsymmetrisch angeordnet. Zweckmäßig ist die komplette Fahrzeugschale 2 spiegelsymmetrisch bezüglich der Längsmittelebene 7 aufgebaut.

Entsprechend der Seitenansicht gemäß Fig. 1, die einer senkrecht zur Längsmittelebene 7 orientierten Projektion entspricht, besitzen die taillierten Kanten 6 von einem durch eine geschweifte Klammer gekennzeichneten Heckabschnitt 8 bis zumindest zu einem ebenfalls durch eine geschweifte Klammer gekennzeichneten Mittelabschnitt 9 jeweils einen im wesentlichen geradlinigen Verlauf und sind im wesentlichen nur in einem ebenfalls durch eine geschweifte Klammer gekennzeichneten Frontabschnitt 10 zur Fahrbahn 5 hin relativ schwach konvex gekrümmt. Der Frontabschnitt 10, in dem die Kanten 6 gegenüber der Fahrbahn 5 gekrümmt sind, nimmt hier maximal 30% der Gesamtlänge der Fahrzeugschale 2 ein.

Zweckmäßig ist die Krümmung der Kanten 6 gegenüber der Fahrbahn 5 auf die Taillierung der Kanten 6 gegenüber der Längsmittelebene 7 abgestimmt, derart, dass sich beim Neigen der Fahrzeugschale 2 zum Einstellen einer Schräglage ein relativ sanfter Übergang von der Geradeausfahrt in die Kurvenfahrt erzielen lässt. Ebenso kann die Krümmung der Kanten 6 gegenüber das Fahrbahn 5 auf die Taillierung der Kanten 6 gegenüber der Längsmittelebene 7 so abgestimmt sein, dass die jeweilige Kante 6 bzw. die jeweiligen Kanten 6 in einer vorbestimmten Schräglage im wesentlichen entlang ihrer gesamten Länge etwa gleich tief in die Fahrbahn 5 eingreifen. Hierdurch ergibt sich eine besonders stabile Kurvenführung.

Aus Fig. 3 ist ebenfalls erkennbar, dass zwei Kanten 6, die bezüglich der Längsmittelebene 7 auf derselben Schalenseite benachbart angeordnet sind, zweckmäßig so ausgestaltet sind, dass die bezüglich der Längsmittelebene 7 weiter außenliegende Kante 6 weiter vorn endet als die andere, näher an der Längsmittelebene 7 angeordnete Kante 6. Desweiteren können wenigstens zwei benachbarte Kanten 6, die bezüglich der Längsmittelebene 7 auf derselben Schalenseite liegen, im wesentlichen die selbe Krümmung bzw. die selbe Taillierung gegenüber der Längsmittelebene 7 aufweisen.

Fig. 3 zeigt außerdem, dass die Fahrzeugschale 2 ein Frontende 11 aufweist, das im wesentlichen geradlinig ausgebildet ist und sich senkrecht zur Längsmittelebene 7 erstreckt. Diese Bauweise ermöglicht es, dass sich auch die weiter außenliegenden Kanten 6 weit nach vorn erstrecken können.

Aus der Ansicht gemäß Fig. 3 ist ebenfalls erkennbar, dass eine senkrecht zur Längsmittelebene 7 gemessene Breite der Fahrzeugschale 2 von deren Heckende 12 bis zu deren Frontende 11 im wesentlichen nur zunimmt.

Mit Bezug auf Fig. 4 ist die Querschnittsentwicklung der Fahrzeugschale 2 entlang der Fahrzeuglängsrichtung so gestaltet, dass die Wölbung des Querschnitts gegenüber der Fahrbahn 5 von hinten nach vorn abnimmt. Diese Bauweise ergibt für die außen angeordneten Kanten 6 einen Anordnung, die das Steuern des Schneegleiters 1 erheblich vereinfacht. In den Schnittansichten der Fig. 4 besitzt die Fahrzeugschale 2 keine Schräglage gegenüber der Fahrbahn 5, d.h. die Fahrzeugschale 2 erfährt in dieser Position ihre maximale Geradeausführung. Abweichend zu den Darstellungen kann die Fahrzeugschale 2 dabei durchaus mehr oder weniger in die Fahrbahn 5 eintauchen, wobei die symmetrische Anordnung der Kanten 6 die Geradeausfahrt der Fahrzeugschale 2 unterstützt. Wenn zur Einleitung einer Kurvenfahrt das Gewicht verlagert wird, kommt es zu einer Schräglage der Fahrzeugschale 2, wodurch die Kanten 6 auf der einen Seite der Längsmittelebene 7 nunmehr stärker mit der Fahrbahn 5 in Eingriff stehen als die Kanten 6 der anderen Schalenseite 2. Die Krümmung der taillierten Kanten 6 zwingt dann die Fahrzeugschale 2 in eine Kurvenbahn.

Die zuvor beschriebene Entwicklung des Fahrzeugschalenquerschnitts ermöglicht nun eine Kantenanordnung, bei der ein Kanteneingriff mit der Fahrbahn 5 bei zunehmender Schräglage der Fahrzeugschale 2 zuerst im Frontabschnitt 10 der Fahrzeugschale beginnt und bei zunehmender Schräglage von vorn nach hinten zunimmt. In Fig. 4 ist dieser Zusammenhang durch den in den Querschnitten eingetragenen Winkel α symbolisiert, der den Neigungswinkel der Fahrzeugschale 2 angibt, der erforderlich ist, bis die nächste äußere Kante 6 mit der Fahrbahn 5 in Eingriff kommt. Dieser Winkel α nimmt von vorn nach hinten zu.

Diese Bauweise ermöglicht eine einfache Dosierbarkeit des Lenkvorgangs, wodurch die Beherrschbarkeit des Schneegleiters 1 dementsprechend rasch erlernbar ist.

Aus den Querschnitten der Fig. 4 ist außerdem erkennbar, dass die Außenseite 4 einen geradlinigen Mittelabschnitt 13 aufweist. Diese Querschnittskontur ergibt in Verbindung mit der unter Bezugnahme auf Fig. 1 beschriebenen schwachen Krümmung der Kanten 6 gegenüber der Fahrbahn 5 eine im wesentliche glatte Lauffläche für die Geradeausfahrt des Schneegleiters 1. Der Mittelabschnitt 13 ist seitlich durch die am nächsten an der Längsmittelebene 7 angeordneten, zu dieser hin taillierten Kanten 6 begrenzt.

Zwischen zwei benachbarten Kanten 6 ist die Außenseite 4 im Querschnitt mit geradlinigen Abschnitten 14 ausgestattet. Derartige geradlinige Abschnitte 14 ermöglichen eine preiswerte Herstellung einer relativ stabilen und biegesteifen Fahrzeugschale 2.

Bei der hier gezeigten Ausführungsform sind die taillierten Kanten 6 jeweils durch nach außen von der Außenseite 4 abstehende Vorsprünge ausgebildet. Derartige Kanten 6 können somit bereits bei der Formgebung der Fahrzeugschale 2 ausgebildet werden. Es kann jedoch vorteilhaft sein, derartige Kanten 6 separat herzustellen und an der Fahrzeugschale 2 zu montieren bzw. in diese bei der Herstellung der Fahrzeugschale 2 zu integrieren. Auf diese Weise können beispielsweise Kanten 6 aus Stahl in eine Fahrzeugschale 2 aus Kunststoff integriert werden. Desweiteren ist es grundsätzlich möglich, derartige Kanten 6 auch durch Rücksprünge oder Vertiefung oder Rillen auszubilden, die in die Außenseite 4 der Fahrzeugschale 2 eingebracht sind. Exemplarisch ist hier die mittig angeordnete, geradlinige Kante 6 durch eine V-förmige Rille realisiert.

Zur besseren Handhabbarkeit kann die Fahrzeugschale 2 entlang ihrer oberen Berandung mit Grifföffnungen 15 und mit zusätzlichen Öffnungen 16 ausgestattet sein, die beispielsweise die Anbringung eines Schleppseils oder dergleichen ermöglichen.

Die Geradeausführung der Fahrzeugschale 2 erfolgt durch deren spiegelsymmetrisch verlaufenden Kanten 6 in Rutschrichtung. Bei symmetrischer Gewichtsbelastung der Fahrzeugschale 2 wirken die spiegelsymmetrisch zur Längsmittelebene 7 angeordneten Kanten 6 zentrierend bzw. stabilisierend für die Geradeausführung des Schneegleiters 1. Eine Kurvenfahrt kann dadurch eingeleitet werden, dass der Fahrer durch Verlagerung des Gewichts, z.B. durch Neigung seines Oberkörpers, nach links oder rechts den Schneegleiter 1 in eine Schräglage bringt. Je nach Schräglage kommen dadurch dem Schwerpunkt seitlich vorgelagerte Kanten 6 zum Einsatz. Diese seitliche Kantenführung leitet die gewünschte Kurve ein oder hält diese. Ein Bremsvorgang kann durch eine schnelle Kurveneinleitung bis zum Querstehen der Kanten 6 quer zur Rutschrichtung erreicht werden. Durch die Gewichtsverlagerung in der Fahrzeugschale 2 kann der Schneegleiter 1 relativ einfach kontrolliert gesteuert und gebremst werden, ohne das hierzu Zusatzgeräte erforderlich sind.

## Patentansprüche

1. Schneegleiter mit einer Fahrzeugschale (2), die an ihrer Innenseite (3) zur Aufnahme wenigstens einer Person dient, die an ihrer Außenseite (4) mehrere, in Fahrzeuglängsrichtung verlaufende Kanten (6) aufweist und deren Außenseite (4) in einem quer zur Fahrzeuglängsrichtung verlaufenden Querschnitt zur Fahrbahn (5) hin im wesentlich konvex gestaltet ist,
**dadurch gekennzeichnet,**
**dass** zumindest einige der Kanten (6) in einer senkrecht zur Fahrbahn (5) orientierten Projektion zu einer senkrecht zur Fahrbahn (5) verlaufenden Längsmittelebene (7) der Fahrzeugschale (2) hin konvex gekrümmt sind.

2. Schneegleiter nach Anspruch 1,
**dadurch gekennzeichnet,**
**dass** sich bei zwei Kanten (6), die bezüglich der Längsmittelebene (7) auf derselben Schalenseite benachbart sind, die bezüglich der Längsmittelebene (7) weiter außen liegende Kante (6) bezüglich der Fahrzeuglängsrichtung weiter nach vorn erstreckt als die bezüglich der Längsmittelebene (7) nach innen benachbarte Kante (6).

3. Schneegleiter nach Anspruch 1 oder 2,
**dadurch gekennzeichnet,**
**dass** wenigstens zwei Kanten (6), die bezüglich der Längsmittelebene (7) auf derselben Schalenseite benachbart sind, die selbe Krümmung aufweisen.

4. Schneegleiter nach einem der Ansprüche 1 bis 3,
**dadurch gekennzeichnet,**
**dass** in der senkrecht zur Fahrbahn (5) orientierten Projektion zwischen den beiderseits der Längsmittelebene (7) am nächsten an der Längsmittelebene (7) verlaufenden gekrümmten Kanten (6) wenigstens eine geradlinige Kante (6) vorgesehen ist.

5. Schneegleiter nach einem der Ansprüche 1 bis 4,
**dadurch gekennzeichnet,**
**dass** zumindest einige der Kanten (6) in einer senkrecht zur Längsmittelebene (7) orientierten Projektion von einem Heckabschnitt (8) der Fahrzeugschale (2) bis wenigstens in einen Mittelabschnitt (9) der Fahrzeugschale (2) einen geradlinigen Verlauf und in einem Frontabschnitt (10) der Fahrzeugschale (2) einen zur Fahrbahn (5) hin relativ schwach konvex gekrümmten Verlauf aufweisen.

6. Schneegleiter nach Anspruch 5,
**dadurch gekennzeichnet,**
**dass** der Frontabschnitt (10) maximal 30% der Gesamtlänge der Fahrzeugschale (2) umfasst.

7. Schneegleiter nach einem der Ansprüche 1 bis 6,
**dadurch gekennzeichnet,**
**dass** von der Längsmittelebene (7) beabstandete Kanten (6) so angeordnet sind, dass ihr Eingriff mit der Fahrbahn (5) bei zunehmender Schräglage der Fahrzeugschale (2) bezüglich der Fahrzeuglängsrichtung vorn beginnt und von vorn nach hinten zunimmt.

8. Schneegleiter nach einem der Ansprüche 1 bis 7,
**dadurch gekennzeichnet,**
**dass** die Kanten (6) bezüglich der Längsmittelebene (7) spiegelsymmetrisch angeordnet sind.

9. Schneegleiter nach einem der Ansprüche 1 bis 8
**dadurch gekennzeichnet,**
**dass** die Außenseite (4) im Querschnitt einen geradlinigen Mittelabschnitt (13) aufweist.

10. Schneegleiter nach einem der Ansprüche 1 bis 9,
**dadurch gekennzeichnet,**
**dass** die Außenseite (4) im Querschnitt zumindest zwischen zwei benachbarten Kanten (6) einen geradlinigen Abschnitt aufweist.

11. Schneegleiter nach einem der Ansprüche 1 bis 10,
**dadurch gekennzeichnet,**
**dass** die Fahrzeugschale (2) ein im wesentlichen geradliniges Frontende (11) aufweist, das senkrecht zur Längsmittelebene (7) verläuft.

12. Schneegleiter nach einem der Ansprüche 1 bis 11,
**dadurch gekennzeichnet,**
**dass** die senkrecht zur Längsmittelebene (7) gemessene Breite der Fahrzeugschale (2) von deren Heckende (12) bis zu deren Frontende (11) zunimmt.

13. Schneegleiter nach einem der Ansprüche 1 bis 12,
**dadurch gekennzeichnet,**
**dass** die Fahrzeugschale (2) nach oben offen ausgebildet ist und dass ihre Innenseite (3) und ihre Außenseite (4) so aufeinander abgestimmt sind, dass mehrere Fahrzeugschalen (2) ineinander stapelbar sind.

14. Schneegleiter nach einem der Ansprüche 1 bis 13,
**dadurch gekennzeichnet,**
**dass** die Kanten (6) durch Vorsprünge und/oder durch Rücksprünge gebildet sind.
